(19) Europäisches Patentamt

European Patent Office

Office européen des brevets

(11) **EP 2 570 901 B1**

(12) **EUROPEAN PATENT SPECIFICATION**

(45) Date of publication and mention
of the grant of the patent:
**27.03.2019 Bulletin 2019/13**

(21) Application number: **10852402.6**

(22) Date of filing: **08.09.2010**

(51) Int Cl.:
***G06F 3/048*** (2013.01)     ***G06F 3/041*** (2006.01)
***G06F 3/0488*** (2013.01)

(86) International application number:
**PCT/CN2010/076742**

(87) International publication number:
**WO 2011/150607 (08.12.2011 Gazette 2011/49)**

(54) **METHOD AND MOBILE TERMINAL FOR AUTOMATICALLY RECOGNIZING GESTURE**

VERFAHREN UND MOBILES ENDGERÄT ZUR AUTOMATISCHEN GESTENERKENNUNG

PROCÉDÉ ET TERMINAL MOBILE DE RECONNAISSANCE AUTOMATIQUE D'UN GESTE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **31.05.2010 CN 201010188422**

(43) Date of publication of application:
**20.03.2013 Bulletin 2013/12**

(73) Proprietor: **ZTE Corporation
Shenzhen, Guangdong 518057 (CN)**

(72) Inventors:
• **WEI, Lanying
Shenzhen
Guangdong 518057 (CN)**
• **ZHAO, Wei
Shenzhen
Guangdong 518057 (CN)**

• **YANG, Xinli
Shenzhen
Guangdong 518057 (CN)**
• **HU, Bo
Shenzhen
Guangdong 518057 (CN)**

(74) Representative: **Bjerkéns Patentbyrå KB
(Stockholm)
Box 5366
102 49 Stockholm (SE)**

(56) References cited:
**EP-A2- 1 772 800         EP-A2- 2 042 978
EP-A2- 2 148 268         WO-A2-2005/018129
CN-A- 101 295 217       CN-A- 101 408 814
CN-A- 101 546 233       CN-A- 101 634 565
US-A1- 2006 055 662    US-A1- 2008 309 632**

## Description

### TECHNICAL FIELD

The disclosure relates to a gesture recognition technology in the field of a mobile terminal, and in particular to a method and a mobile terminal for automatically recognizing a gesture.

### BACKGROUND

The rapid development of mobile communication has caused different degrees of variation in every field of the whole society, and at present, the mobile terminal has become an essential part in the living of most people. In the future, the human-machine interaction of the mobile terminal mainly takes naturality, multi-channel and cooperation as the main direction of development, and tries to form multi-channel and multi-mode natural conversation between a user and the mobile terminal by a natural human communication way, such as gesture, voice, expression and the like, in order to improve experience effect of the user. A User Interface (UI) of the mobile terminal tends to be to "user-centered" from "technology-centered", so that the natural and intuitive human-machine interface has become an inevitable development trend of the UI. Wherein, a gesture interaction, as a UI interaction form adapted to the natural interaction trend, is drawing more and more attention and becoming more and more popularized in terms of application.

Manufacturers of the mobile terminal have spent much energy on the UI technology, including the UI design, mouse, keyboard, trackball, gravity sensor and the like. With the popularization of an intelligent mobile terminal, a touch screen becomes more and more irreplaceable, and the gesture also becomes a novel human-machine interaction technology due to its novelty, convenience, and ease of use. The human-machine interaction which is touchable by two fingers based on a natural gesture, is a novel interaction technology for the natural and harmonious conversation between the user and the mobile terminal. Such a way is user-centered, and, different from a conventional touch screen which can be operated by only one finger, this way allows a user to operate a mobile terminal by multiple fingers at the same time or even allows a synchronous operation of multiple users. However, the synchronous operation of multiple fingers means that a more complex task is allowed to be processed; therefore, how to quickly and efficiently implement the gesture interaction is an urgent problem to be solved by the manufacturer of the mobile terminal.

So far, the Apple incorporation is performing such research, and the realized functions mainly include unlocking with sliding, zooming in or out, flipping and the like, but mainly concentrates on the design of the UI. In addition, the under-layer gesture interactive processing made by some touch screen manufacturers is mainly for studying some under-layer algorithms and structures; however, due to the different algorithms and structures, the mobile terminals among the manufactures are very difficult to be compatible with one another.

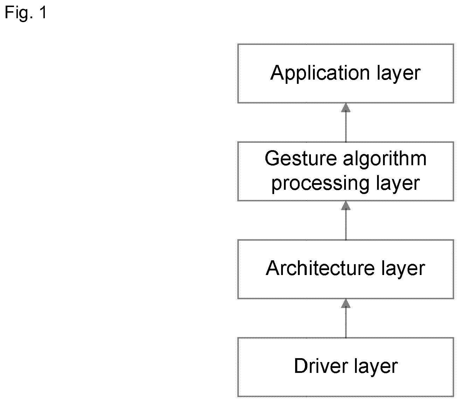

Fig. 1 is a schematic diagram showing a structure of a system for recognizing a gesture on an android platform in the prior art; as shown in Fig. 1, two fingers move apart or together one time; it is assumed that a driver layer reports data to an architecture layer at a frequency of 80Hz, the architecture layer needs to perform calculations 80*N times per second, wherein N represents touch control information of a finger required for a complete event; the touch control information mainly includes: values of x and y coordinates with the top left corner of a mobile terminal screen as an origin, a finger width w between the finger, a pressure p of the finger on the screen, a value of a Synchronize Multi-Touch Report (SYN_MT_REPORT), and a value of a Synchronize Report (SYN_REPORT); if there is only one finger, then N=6; if there are two fingers, then N=11; if there are M fingers, then N=5*M+1; the architecture layer pre-processes information of a complete event and puts the processed data in a motion class; because the driver layer reports the data to the architecture layer at the frequency of 80Hz, at most 80 motions are produced per second; then, the pre-processed data in the motion class are sent to a gesture algorithm processing layer to be processed, and since the gesture algorithm processing layer processes the data one time every 28ms, calculations are performed about 35 times per second.

The calculation process of the algorithm adopted by the gesture algorithm processing layer is as follows: coordinates $(x'_1, y'_1)$ and $(x'_2, y'_2)$ of two points where two fingers press down for the first time and coordinates $(x_1, y_1)$ and $(x_2, y_2)$ of two points where the two fingers press down for the second time are respectively recorded; a previous distance and a current distance between the two points are obtained respectively:

$$\Delta s_{pre} = \sqrt{(x'_2 - x'_1)^2 + (y'_2 - y'_1)^2} \quad \text{and}$$

$$\Delta s_{cur} = \sqrt{(x_2 - x_1)^2 + (y_2 - y_1)^2} \; ;$$ then, a scale of moving the two fingers apart or together is obtained: *scale* $= \Delta s_{cur} / \Delta s_{pre}$, where $\Delta s_{cur}$ represents the current distance between the two points and $\Delta s_{pre}$ represents the previous distance between the two points, and the scale value is sent to an application layer; if the two fingers are moving apart, the scale value sent cannot be greater than 1.25 times the previous scale value; and if the two fingers are moving together, the scale value sent cannot be less than 0.8 times the previous scale value. The defects of the method are that: the algorithm adopted by the gesture algorithm processing layer performs calculations about 35 times per second, so that the gesture algorithm processing layer has a large amount of calculation and thus will cause a slow response of the mobile terminal; furthermore, a processing speed further depends on a reporting frequency of the driver layer and thus does not have a capability of self-adaptive adjustment as required.

US 2008/0309632 A1 discloses the detection of finger pinch, rotate, and tap gestures along with a translation and optionally liftoff motion to initiate certain actions. To detect both the gesture and the translation, a certain amount of gesture scaling speed can be detected along with a certain amount of translation speed and distance traveled. For a finger pinch gesture, the scaling speed can be computed as the dot product of the velocity vectors of two or more fingers coming together. For a finger rotation gesture, the scaling speed can be computed as a cross product of the velocity vectors of the rotating fingers. The translation speed of a gesture can be computed as the average of the velocity vectors of any fingers involved in the gesture. The amount of gesture scaling speed and translation speed needed to trigger the recognition of a combined gesture with translation can be a predetermined ratio.

WO 2005/018129 A2 discloses a method and algorithm for determination of gestures on pointing devices. The invention provides for means to make the probability of erroneous operations arbitrarily small and variable, suitable to the present task at hand. The invention is applicable to a variety of different types of pointing devices. Historical data are maintained regarding the performance of gestures by a human operator, and are analyzed to develop heuristic thresholds distinguishing whether or not the gesture occurred.

EP 2042978 A2 discloses a method and apparatus for selecting an object within a user interface by performing a gesture. The invention relates to a method and an apparatus for invoking a command within a user interface by performing a gesture. The invention provides a system that facilitates invoking a command. During operation, the system suggests with a graphic element a gesture to use to invoke a command. The system then receives the gesture from a user at a device. Note that the gesture is received via an input mechanism, and also note that the gesture is a predetermined manipulation of the input mechanism. The system then determines a graphic element within the user interface that is associated with the gesture. Finally, upon determining the graphic element associated with the gesture, the system invokes the command associated with the graphic element.

## SUMMARY

In view of the problem above, the main purpose of the disclosure is to provide a method and a mobile terminal for automatically recognizing a gesture, which can quickly and efficiently implement an automatical recognition of the gesture of multiple fingers.

In order to achieve the above purpose, the technical solution of the disclosure is implemented as follows.

The disclosure provides a method for automatically recognizing a gesture, which includes:

a touch screen of a mobile terminal is calibrated, and a time variation threshold and a distance variation threshold are acquired and stored when fingers moves on the touch screen;

touch control information of the finger on the touch screen of the mobile terminal is acquired, and data of the touch control information acquired is pre-processed; and

the time variation threshold and the distance variation threshold are extracted, and a gesture is recognized according to the pre-processed data, the touch control information and the extracted time variation threshold and distance variation threshold,

a touch screen of a mobile terminal is calibrated, and a time variation threshold and a distance variation threshold are acquired and stored when fingers moves on the touch screen may include that:

a motion speed is obtained according to a distance variation between the fingers and time for the variation, a speed which is most approximate to the obtained motion speed is found out from pre-stored speed empirical values, the distance variation threshold is obtained according to the most approximate speed and the time variation threshold selected from pre-stored time empirical values, and the time variation threshold and distance variation threshold obtained are stored, and

a gesture is recognized according to the pre-processed data, the touch control information and the extracted time variation threshold and distance variation threshold may include that: a gesture algorithm processing layer of the mobile terminal obtains a motion state of the finger on the touch screen according to the pre-processed data; when determining that the motion state is one or more fingers are moving on the touch screen, determines the number of fingers moving on the touch screen according to the number of separators used for separating touch control information of different fingers in the touch control information; and when determining that two fingers are moving on the touch screen, records current coordinates of the two fingers and a current time in real time and calculates a distance between the two fingers; and when an absolute value of a difference between a current distance between the two fingers and a previous distance between the two fingers is greater than the distance variation threshold and a difference between two current times is greater than the time variation threshold, determining that the gesture is a valid gesture.

In the above method, the pre-stored speed empirical values may be gesture speed empirical values obtained by sampling users of different ages, heights and sexes, and may be arranged according to a normal distribution.

In the above method, that the touch control information of the finger on the touch screen of the mobile terminal is acquired may include that:

a chip in a driver layer of the mobile terminal acquires the touch control information of the finger on the touch screen of the mobile terminal in real time, and sends the touch control information to an architecture layer; wherein the touch control information includes: coordinate values of the finger in a coordinate system with a top left corner of the touch screen of the mobile terminal as an origin, a finger width of the finger, a pressure from the finger on the touch screen, and a Button Touch value of the finger.

In the above method, that data of the touch control information is pre-processed may include that:

an architecture layer of the mobile terminal records motion state information of the finger into a motion class according to the data of the touch control information; and the architecture layer records the data of the touch control information into the motion class and sends the data in the motion class to a gesture algorithm processing layer; wherein the motion state information includes information respectively indicating that one or more fingers are moving, all fingers are lifted up, and one or more fingers press down.

The method may further include that:

when function corresponding to that three fingers are moving on the touch screen, current coordinates of the three fingers and a current time are recorded in real time, and a radius of a circumscribed circle of the coordinates of the three fingers is calculated; and when an absolute value of a difference between the radius of the circumscribed circle of the current coordinates of the three fingers and that of previous coordinates of the three fingers is greater than the distance variation threshold and a difference between two current times is greater than the time variation threshold, function corresponding to that the gesture is a valid gesture.

The method may further include that:

when function corresponding to that the motion state is all the fingers are lifted up or one or more fingers press down, function corresponding to that the gesture is an invalid gesture.

The method may further include that: a function corresponding to the gesture is realized on the mobile terminal according to a recognition result.

The disclosure further discloses a mobile terminal for automatically recognizing a gesture, which includes: a gesture calibrating module, a driver layer, an architecture layer and a gesture algorithm processing layer, wherein

the gesture calibrating module is configured to calibrate a touch screen of the mobile terminal, and acquire and store a time variation threshold and a distance variation threshold when fingers moves on the touch screen;

the driver layer is configured to acquire touch control information of the finger on the touch screen of the mobile terminal;

the architecture layer is configured to pre-process data of the touch control information acquired; and

the gesture algorithm processing layer is configured to extract the time variation threshold and distance variation threshold pre-stored, and recognize a gesture according to the pre-processed data, the touch control information and the time variation threshold and distance variation threshold extracted,

the gesture calibrating module is further configured to: obtain a motion speed according to a distance variation between fingers and time for the variation; find out a speed which is most approximate to the obtained motion speed from pre-stored speed empirical values; obtain the distance variation threshold according to the most approximate speed and the time variation threshold selected from pre-stored time empirical values, and store the time variation threshold and distance variation threshold obtained, and

in order to recognize a gesture according to the pre-processed data, the touch control information and the time variation threshold and distance variation threshold extracted, the gesture algorithm processing layer is further configured to:

obtain, by a gesture algorithm processing layer of the mobile terminal, a motion state of the finger on the touch screen according to the pre-processed data; when determining that the motion state is one or more fingers are moving on the touch screen, determine the number of fingers moving on the touch screen according to the number of separators used for separating touch control information of different fingers in the touch control information; and when determining that two fingers are moving on the touch screen, record current coordinates of the two fingers and a current time in real time, and calculate a distance between the two fingers; and when an absolute value of a difference between a current distance between the two fingers and a previous distance between the two fingers is greater than the distance variation threshold and a difference between two current times is greater than the time variation threshold, determine that the gesture is a valid gesture.

The mobile terminal may further include: an application layer and a database, wherein

the application layer is configured to realize a function corresponding to the gesture on the mobile terminal according to a recognition result; and

the database is configured to store the acquired time variation threshold and distance variation threshold, and further configured to store speed empirical values and time empirical values.

By means of the method and the mobile terminal for automatically recognizing a gesture provided by the disclosure, the time variation threshold and distance variation threshold pre-stored are extracted, and the gesture is recognized according to the pre-processed data, the touch control information and the extracted thresholds, that is, the gesture is recognized by adopting a new algorithm in the gesture algorithm processing layer; and compared with the prior art in which the calculations are performed 35 times per second, the disclosure only needs the calculations 10 to 15 times per second, which greatly reduces the amount of calculation of the gesture algorithm processing layer, improves the response speed of the mobile terminal, and implements quickly and efficient automatic gesture recognition, so that better user experience is brought to the user of the mobile terminal using the touch screen, and the operation of the user is more convenient and quick. In addition, the gesture can be calibrated for different users in the disclosure, so that the gesture recognition has a better adaptability.

## BRIEF DESCRIPTION OF THE DRAWINGS

Fig. 1 is a schematic diagram showing a structure of a system for recognizing a gesture on an android platform in the prior art;

Fig. 2 is a schematic diagram showing a flow of a method for automatically recognizing a gesture according to the disclosure;

Fig. 3 is a schematic diagram of a data format when different numbers of fingers press down when a BTN_TOUCH value is contained in the disclosure;

Fig. 4 is a schematic diagram of a data format when different numbers of fingers press down when a BTN_TOUCH value is not contained in the disclosure; and

Fig. 5 is a schematic diagram showing a structure of a system for automatically recognizing a gesture according to the disclosure.

## DETAILED DESCRIPTION

The basic idea of the disclosure is that: a touch screen of a mobile terminal is calibrated, and a time variation threshold and distance variation threshold are acquired and stored when a finger moves on the touch screen; touch control information of the finger on the touch screen of the mobile terminal is acquired, and data of the touch control information acquired is pre-processed; and the time variation threshold and the distance variation threshold are extracted, and a gesture is recognized according to the pre-processed data, the touch control information and the extracted time variation threshold and distance variation threshold.

The disclosure will be further described in detail with reference to the drawings and specific embodiments hereinafter.

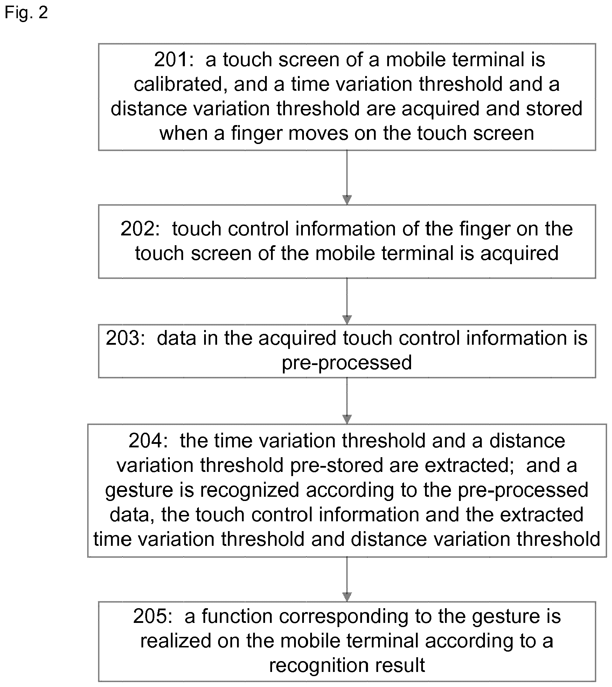

The disclosure provides a method for automatically recognizing a gesture, and Fig. 2 is a schematic diagram showing a flow of the method for automatically recognizing the gesture according to the disclosure; as shown in Fig. 2, the method includes the following steps.

Step 201: a touch screen of a mobile terminal is calibrated, and a time variation threshold and a distance variation threshold are acquired and stored when a finger moves on the touch screen;

specifically, when a finger of a user touches the touch screen of the mobile terminal for the first time, a gesture calibration function of the mobile terminal is started to calibrate the touch screen of the mobile terminal, thereafter, the calibration is not needed any more for each further use; here, the gesture calibration function can be realized by a calibrated application program.

The gesture of two fingers is taken to explain the calibration process of the touch screen of the mobile terminal; a distance variation $\Delta S_i$ between the two fingers and used time $\Delta \tau_i$ from the moment when the two fingers press the touch screen down to the moment when the two fingers are lifted up from the touch screen are recorded, so as to calculate a motion speed $\upsilon_i$ of the two fingers; a speed $\upsilon$ which is the most approximate to $\upsilon_i$ is found out from speed empirical values pre-stored in the mobile terminal; according to the size of the touch screen, a frequency at which a driver layer sends touch control information an architecture layer, and the like; a time variation threshold $\Delta \tau$ is selected from time empirical values pre-stored in the mobile terminal, $\upsilon$ multiplies by $\Delta \tau$ to obtain the distance variation threshold $\Delta S$, and $\Delta \tau$ and $\Delta S$ are stored for extraction; wherein, the value of $\Delta \tau$ must be an integral multiple of an interruption time which is an interval of the time when the driver layer sends the touch control information to the architecture layer for two times; for example, the frequency at which the driver layer sends the touch control information to the architecture layer for two times is 80Hz, then the value of $\Delta \tau$ is more suitable 3 to 5 times the interruption time.

The pre-stored speed empirical values and time empirical values are gesture speed empirical values and gesture motion time empirical values obtained by sampling users of different ages, heights, and sexes. The speed value which is most approximate to the calculated speed and the time variation threshold are selected from the empirical values rather than directly using the calculated value as these empirical values have a certain representativeness and can exclude the speed value and gesture motion time in some extreme cases, such as an extremely high speed or an extremely low speed, so that an error in the calibration process caused by a wrong operation can be avoided. In the disclosure, the pre-stored speed empirical values are arranged according to a normal distribution, so that the efficiency of finding out the speed $\upsilon$ which is the most approximate to $\upsilon_i$ from the pre-stored speed empirical values in a database of the mobile terminal will be improved and a response speed of the mobile terminal is thus accelerated.

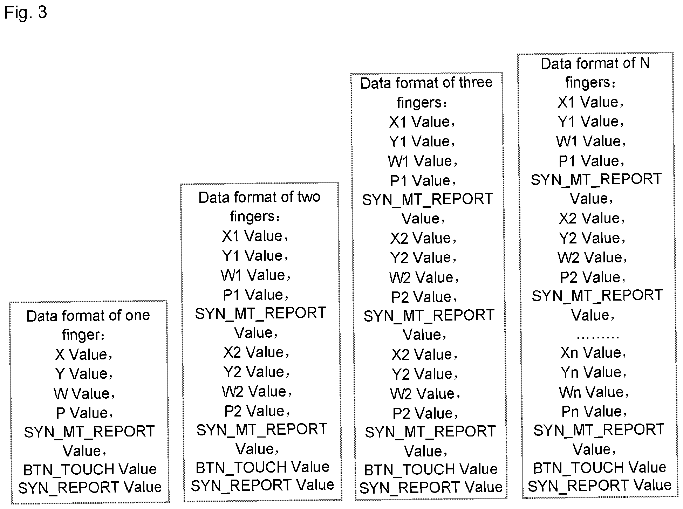

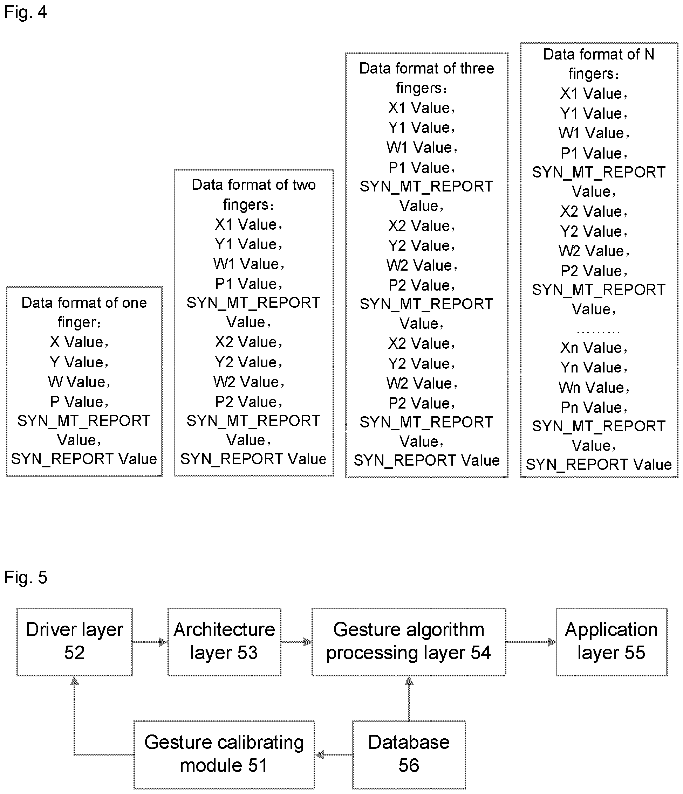

Step 202: touch control information of the finger on the touch screen of the mobile terminal is acquired; specifically, a chip in the driver layer of the mobile terminal acquires the touch control information of the finger on the touch screen of the mobile terminal in real time, and sends the acquired touch control information to the architecture layer through a transmission channel between the driver layer and the architecture layer in a specific data format, wherein the touch control information includes: coordinate values x and y of the finger in a coordinate system with the top left corner of the touch screen of the mobile terminal as an origin, a finger width w of the finger, a pressure p of the finger on the touch screen, and the Button Touch "BTN_TOUCH" value of the finger; when the BTN_TOUCH value is 1, it means that one or more fingers press down; when the BTN_TOUCH value is 0, it means that all fingers are lifted up; and only when one or more fingers press down for the first time or all the fingers are lifted up, that is, when the BTN_TOUCH value is changed, the BTN_TOUCH value can be sent to the architecture layer as a part of the touch control information; wherein the specific data formats are as shown in Fig. 3 and Fig. 4.

Fig. 3 shows the data format when one, two, three and N fingers press down respectively when the BTN_TOUCH value is contained, and Fig. 4 shows the data format when one, two, three and N fingers press down respectively when the BTN_TOUCH value is not contained; wherein a SYN_MT_REPORT value is a separator used for separating the touch control information of different fingers, and a SYN_REPORT is a separator used for separating the touch control information sent each time. The driver layer sends the touch control information to the architecture layer at a specific frequency which is also called an interruption frequency, and different touch screen manufacturers provide different interruption frequencies, generally 60Hz to 80Hz or even up to 250Hz.

Step 203: data in the acquired touch control information is pre-processed; specifically, the architecture layer of the mobile terminal receives the touch control information from the driver layer in the data format of the touch control information sent by the driver layer, for example, when the driver layer sends the touch control information in the order of the coordinate value x, the coordinate value y, the finger width w of the finger and the pressure p of the finger on the touch screen, the architecture layer receives the touch control information in such the order of the coordinate value x, the coordinate value y, the finger width w of the finger and the pressure p of the finger on the touch screen; the architecture layer pre-processes data in the received touch control information, i.e., recording motion state information of the finger into a motion class according to the data in the received touch control information; wherein the motion state information includes ACTION_MOVE, ACTION UP and ACTION_DOWN, wherein the ACTION_MOVE represents that one or more fingers are moving, the ACTION_UP represents that all the fingers are lifted up, and the ACTION_DOWN represents that one or more fingers press down; whether the finger is in the ACTION_MOVE state is determined according to the existence or not of the BTN_TOUCH value in the touch control information, if the BTN_TOUCH value does not exist in the touch control information, it means that one or more fingers are moving on the touch screen, i.e., being in the ACTION_MOVE state; if the BTN_TOUCH value exists in the touch control information, it is judged whether the BTN_TOUCH value is 0 or 1, if the BTN_TOUCH value is 0, it means that all the fingers are lifted up, i.e., being in the ACTION_UP state, and if the BTN_TOUCH value is 1, it means that one or more fingers press down, i.e., being in the ACTION_DOWN state; meanwhile, the architecture layer records the data in the touch control information into the motion class, in order to obtain a motion track of each finger according to the recorded data; the architecture layer sends the data in the motion class to a gesture algorithm processing layer; said motion class is a class program language, the data of the same type is stored into one motion class, and the motion class in the disclosure serves as a storage medium for storing the touch control information and the pre-processed touch control information.

Step 204: the time variation threshold and the distance variation threshold pre-stored are extracted; and a gesture is recognized according to the pre-processed data, the touch control information and the extracted time variation threshold and distance variation threshold; specifically, the gesture algorithm processing layer of the mobile terminal receives the data in the motion class from the architecture layer; the motion state of the finger on the touch screen can be known according to the received motion state information; since the SYN_MT_REPORT value in the touch control information is the separator used for separating the touch control information of different fingers, the number of fingers moving on the touch screen can be known according to the number of SYN_MT_REPORTs in the touch control information in the data.

The gesture algorithm processing layer acquires the motion state information of the finger according to the data in the motion class, if the motion state information is the ACTION_UP or ACTION_DOWN, it means that all the fingers are lifted up or one or more finger press down, accordingly, the finger does not move on the mobile terminal, and the gesture is an invalid gesture, so that the gesture needs not be recognized; and the flow is ended; if the motion state information is the ACTION_MOVE, when the gesture algorithm processing layer determines that two fingers are moving on the touch screen, for example, the two fingers are moving together and apart:

when the two fingers are moving on the touch screen of the mobile terminal, the gesture algorithm processing layer records the current coordinates $(x_1, y_1)$ and $(x_2, y_2)$ of the two fingers and the current time $T_1$ in real time and calculates the distance $S_1$ between the two fingers:

$$S_1 = \sqrt{(x_2 - x_1)^2 + (y_2 - y_1)^2} \; ;$$

when it is time to further record coordinates of the two fingers, the coordinates of the two fingers are recorded, and the distance S2 between the two fingers and T2 are calculated; the gesture algorithm processing layer extracts $\Delta\tau$ and $\Delta S$ stored in Step 201 from the database, and compares $|S_2 - S_1|$ with $\Delta S$ and compares $T_2 - T_1$ with $\Delta\tau$, only when $|S_2 - S_1| > \Delta S$ and $T_2 - T_1 > \Delta\tau$ set up, the motion gesture of the two fingers this time is valid, and the variation coefficient scale of the gesture is calculated: scale=$S_2/S_1$; and if the motion gesture of the two fingers this time is invalid, the next gesture is recognized; when the gesture algorithm processing layer determines that three fingers are moving on the touch screen, for example, the three fingers are moving together and apart: the gesture algorithm processing layer records current coordinates of the three fingers in real time, obtains the circumscribed circle of the current coordinates of the three fingers based on the current coordinates of the three fingers according to the principle that three points being not in a straight line determine a circumscribed circle, and calculates the radius $r_1$ of the circumscribed circle and the current time $T_3$; when it is time to further record the coordinates of three fingers, the current coordinates of the three fingers and the current time $T_4$ are recorded, and the radius $r_2$ of the circumscribed circle of the current coordinates of the three fingers at the moment is calculated; only when $|r_2 - r_1| > \Delta S$ and $T_4 - T_3 > \Delta\tau$ set up, the motion gesture of the three fingers is valid, and the variation coefficient scale of the gesture is calculated: scale= $r_2/r_1$ ; and the gesture algorithm processing layer sends a recognition result, i.e., the value of the variation coefficient scale of the gesture, to the application layer of the mobile terminal.

Step 205: a function corresponding to the gesture is realized on the mobile terminal according to the recognition result;

specifically, the application layer of the mobile terminal receives the recognition result from the gesture algorithm processing layer, determines whether the scale is greater than 1, if the scale is less than 1, it means that the gesture of the two fingers or three fingers is moving together; for example, an image can be zoomed out on the mobile terminal and the zooming-out scale is calculated according to the value of the scale; if the scale is greater than 1, it means that the gesture of the two fingers or three fingers is moving apart, for example, an image can be zoomed in on the mobile terminal and the zooming-in scale is also calculated according to the value of the scale; and if the scale is equal to 1, it means that the two fingers do not move on the touch screen of the mobile terminal and no operation is executed.

The gesture in the disclosure can be a gesture formed by multiple fingers, and generally the gesture of two or three fingers has a better effect. In addition, the disclosure can be applied to various operating systems, such as Windows Mobile operating system, Symbian operating system, Android operating system and the like, and can further be applied to a Global Positioning System (GPS).

In order to implement the above method, the disclosure further provides a mobile terminal for automatically recognizing a gesture, and Fig. 5 is a diagram showing a structure of the mobile terminal for automatically recognizing the gesture of the disclosure; as shown in Fig. 5, the mobile terminal includes: a gesture calibrating module 51, a driver layer 52, an architecture layer 53 and a gesture algorithm processing layer 54, wherein the gesture calibrating module 51 is configured to calibrate a touch screen of a mobile terminal, and acquire and store a time variation threshold and a distance variation threshold when a finger moves on the touch screen; specifically, that the gesture calibrating module 51 calibrates the touch screen of the mobile terminal, and acquire and store the time variation threshold and the distance variation threshold when the finger moves on the touch screen includes that: the gesture calibrating module 51 of the mobile terminal obtains the motion speed according to the distance variation between the fingers and time for the variation, finds out a speed which is most approximate to the motion speed from pre-stored speed empirical values, obtains the distance variation threshold according to the most approximate speed and the time variation threshold selected from pre-stored time empirical values, and stores the two variation thresholds;

the driver layer 52 is configured to acquire touch control information of the finger on the touch screen of the mobile terminal;

specifically, that the driver layer 52 acquires the touch control information of the finger on the touch screen of the mobile terminal includes that: a chip in the driver layer 52 acquires the touch control information of the finger on the touch screen of the mobile terminal in real time and sends the acquired touch control information to the architecture layer 53 at a specific frequency through a transmission channel between the driver layer 52 and the architecture layer 53 in a specific data format; wherein the touch control information includes: coordinate values of the finger in a coordinate system with the top left corner of the touch screen of the mobile terminal as an origin, a finger width of the finger, a pressure from the finger on the touch screen, and a button touch value of the finger; the architecture layer 53 is configured to pre-process data of the touch control information;

specifically, that the architecture layer 53 pre-processes the data of the touch control information includes that: the architecture layer 53 records the motion state information of the finger into a motion class according to the data in the touch control information, records the data of the touch control information into the motion class and sends the data in the motion class to the gesture algorithm processing layer 54; wherein the motion state information includes: one or more fingers being moving, all fingers being lifted up, and one or more fingers pressing down; and

the gesture algorithm processing layer 54 is configured to extract the time variation threshold and distance variation threshold pre-stored, and recognize a gesture according to the pre-processed data, the touch control information and the time variation threshold and distance variation threshold extracted;

specifically, that the gesture algorithm processing layer 54 extracts the time variation threshold and distance variation threshold pre-stored, and recognizes the gesture according to the pre-processed data, the touch control information and the time variation threshold and distance variation threshold extracted includes that: the gesture algorithm processing layer 54 of the mobile terminal obtains the motion state of the finger on the touch screen according to the pre-processed data, when determining that the motion state is one or more fingers being moving on the touch screen, the gesture algorithm processing layer 54 determines the number of fingers moving on the touch screen according to the number of separators used for separating the touch control information of different fingers in the touch control information, and when determining that two fingers are moving on the touch screen, the gesture algorithm processing layer 54 records current coordinates of the two fingers and a current time in real time and calculates a distance between the two fingers; and when an absolute value of a difference between a current distance between the two fingers and a previous distance between the two fingers is greater than the distance variation threshold and a difference between the two current times is greater than the time variation threshold, the gesture algorithm processing layer 54 calculates the variation coefficient of the gesture, when determining that three fingers are moving on the touch screen, the gesture algorithm processing layer 54 records current coordinates of the three fingers and the current time in real time, and calculates a radius of a circumscribed circle of the coordinates of the three fingers; when an absolute value of a difference between the radius of the circumscribed circle of the current coordinates of the three fingers and that of previous coordinates of the three finger is greater than the distance variation threshold and a difference between two current times is greater than the time variation threshold, the gesture algorithm processing layer 54 calculates the variation coefficient of the gesture; and when determining that all the fingers are lifted up or one or more fingers press down, the gesture is the invalid gesture and the current flow is ended.

The mobile terminal further includes: an application layer 55, wherein

the application layer 55 is configured to realize a function corresponding to the gesture on the mobile terminal according to a recognition result.

The mobile terminal further includes: a database 56, configured to store the acquired time variation threshold and distance variation threshold and further configured to store the speed empirical values and time empirical values.

The above are only preferred embodiments of the disclosure and are not intended to limit the scope of protection of the disclosure.

**Claims**

1. A method for automatically recognizing a gesture, comprising:

   calibrating a touch screen of a mobile terminal, acquiring and storing a time variation threshold and a distance variation threshold when two fingers move on the touch screen (201), comprising:

   obtaining a motion speed according to a distance variation between the two fingers and a time for the variation; finding out a speed which is most approximate to the obtained motion speed from pre-stored speed empirical values; obtaining the distance variation threshold according to the most approximate speed and the time variation threshold selected from pre-stored time empirical values, and storing the time variation threshold and the distance variation threshold obtained;
   acquiring touch control information of each finger on the touch screen of the mobile terminal (202), and pre-processing data of the touch control information acquired (203); and
   extracting the time variation threshold and the distance variation threshold, and recognizing a gesture according to the pre-processed data, the touch control information and the extracted time variation threshold and distance variation threshold (204),

   wherein the recognizing a gesture according to the pre-processed data, the touch control information and the extracted time variation threshold and distance variation threshold comprises: obtaining, by a gesture algorithm processing layer of the mobile terminal, a motion state of the finger on the touch screen according to the pre-processed data; when determining that the motion state is one or more fingers are moving on the touch screen, determining the number of fingers on the touch screen according to the number of separators used for separating touch control information of different fingers in the touch control information; and when determining that two fingers are moving on the touch screen, recording current coordinates of the two fingers and a current time in real time, and calculating a distance between the two fingers; and when an absolute value of a difference between a current distance between the two fingers and a previous distance between the two fingers is greater than the distance variation threshold and a difference between two times is greater than the time variation threshold, determining that the gesture is a valid gesture.

2. The method according to claim 1, wherein the pre-stored speed empirical values are gesture speed empirical values obtained by sampling users of different ages, heights and sexes, and are arranged according to a normal distribution.

3. The method according to claim 1, wherein the acquiring touch control information of each finger on the touch screen of the mobile terminal (202) comprises:
acquiring, by a chip in a driver layer of the mobile terminal, the touch control information of the finger on the touch screen of the mobile terminal in real time, and sending the touch control information to an architecture layer; wherein the touch control information comprises: coordinate values of the finger in a coordinate system with a top left corner of the touch screen of the mobile terminal as an origin, a width of the finger, a pressure from the finger on the touch screen, and a Button Touch value of the finger.

4. The method according to claim 1, wherein the pre-processing data of the touch control information (203) comprises:
recording, by an architecture layer of the mobile terminal, motion state information of the finger into a motion class according to the data of the touch control information; recording the data of the touch control information into the motion class and sending the data in the motion class to a gesture algorithm processing layer; wherein the motion state information comprises information respectively indicating that one or more fingers are moving, all fingers are lifted up, and one or more fingers press down.

5. The method according to claim 1, further comprising:
when determining that three fingers are moving on the touch screen, recording current coordinates of the three fingers and a current time in real time, and calculating a radius of a circumscribed circle of the coordinates of the three fingers; and when an absolute value of a difference between the radius of the circumscribed circle of the current coordinates of the three fingers and that of previous coordinates of the three fingers is greater than the distance variation threshold and a difference between two current times is greater than the time variation threshold, determining that the gesture is a valid gesture.

6. The method according to claim 1, further comprising: determining that the gesture is an invalid gesture when determining that the motion state is all the fingers are lifted up or one or more fingers press down.

7. The method according to claim 1, further comprising: realizing a function corresponding to the gesture on the mobile terminal according to a recognition result.

8. A mobile terminal for automatically recognizing a gesture, comprising:

a gesture calibrating module (51), a driver layer (52), an architecture layer (53) and a gesture algorithm processing layer (54), wherein
the gesture calibrating module (51) is configured to calibrate a touch screen of the mobile terminal, and acquire and store a time variation threshold and a distance variation threshold when two fingers move on the touch screen;
the driver layer (52) is configured to acquire touch control information of each finger on the touch screen of the mobile terminal;
the architecture layer (53) is configured to pre-process data of the touch control information acquired; and
the gesture algorithm processing layer (54) is configured to extract the time variation threshold and distance variation threshold pre-stored, and recognize a gesture according to the pre-processed data, the touch control information and the time variation threshold and distance variation threshold extracted,
wherein the gesture calibrating module (51) is further configured to:

obtain a motion speed according to a distance variation between the two fingers and time for the variation; find out a speed which is most approximate to the obtained motion speed from pre-stored speed empirical values; obtain the distance variation threshold according to the most approximate speed and the time variation threshold selected from pre-stored time empirical values, and store the time variation threshold and distance variation threshold obtained, and
wherein in order to recognize a gesture according to the pre-processed data, the touch control information and the time variation threshold and distance variation threshold extracted, the gesture algorithm processing layer (54) is further configured to:

obtain, by a gesture algorithm processing layer of the mobile terminal, a motion state of the finger on the touch screen according to the pre-processed data; when determining that the motion state is one or more fingers are moving on the touch screen, determine the number of fingers on the touch screen according to the number of separators used for separating touch control information of different fingers in the touch control information; and when determining that two fingers are moving on the touch screen, record current coordinates of the two fingers and a current time in real time, and calculate a distance between the two fingers; and when an absolute value of a difference between a current distance between the two fingers and a previous distance between the two fingers is greater than the distance variation threshold and a difference between two times is greater than the time variation threshold, determine that the gesture is a valid gesture.

9. The mobile terminal according to claim 8, further comprising: an application layer (55) and a database (56), wherein

the application layer (55) is configured to realize a function corresponding to the gesture on the mobile terminal according to a recognition result; and the database (56) is configured to store the acquired time variation threshold and distance variation threshold, and further configured to store speed empirical values and time empirical values.

**Patentansprüche**

1. Verfahren zur automatischen Gestenerkennung, das Folgendes umfasst:

Kalibrieren eines Berührungsbildschirms eines mobilen Endgeräts, Erfassen und Speichern einer Zeitabweichungsschwelle und einer Entfernungsabweichungsschwelle, wenn sich zwei Finger auf dem Berührungsbildschirm (201) bewegen, umfassend:
Abrufen einer Bewegungsgeschwindigkeit anhand einer Entfernungsabweichung zwischen den zwei Fingern und einer Zeit für die Abweichung; Ermitteln einer Geschwindigkeit, welche der abgerufenen Bewegungsgeschwindigkeit am nächsten kommt, aus vorgespeicherten empirischen Geschwindigkeitswerten; Abrufen der Entfernungsabweichungsschwelle anhand der geeignetsten Geschwindigkeit und der Zeitabweichungsschwelle, ausgewählt aus vorgespeicherten empirischen Zeitwerten, und Speichern der Zeitabweichungsschwelle und der Entfernungsabweichungsschwelle, die abgerufen wurden;
Erfassen von Berührungssteuerungsinformationen von jedem Finger auf dem Berührungsbildschirm des mobilen Endgeräts (202) und Vorverarbeiten von Daten der erfassten Berührungssteuerungsinformationen (203); und
Extrahieren der Zeitabweichungsschwelle und der Entfernungsabweichungsschwelle, und Erkennen einer Geste anhand der vorverarbeiteten Daten, der Berührungssteuerungsinformationen und der extrahierten Zeitabweichungsschwelle und Entfernungsabweichungsschwelle (204),
wobei die Gestenerkennung anhand der vorverarbeiteten Daten, der Berührungssteuerungsinformationen und der extrahierten Zeitabweichungsschwelle und Entfernungsabweichungsschwelle Folgendes umfasst:

Abrufen, durch eine Gestenalgorithmus-Verarbeitungsebene des mobilen Endgeräts, eines Bewegungsstatus des Fingers auf dem Berührungsbildschirm anhand der vorverarbeiteten Daten; wenn festgestellt wird, dass der Bewegungsstatus darin besteht, dass sich ein oder mehrere Finger auf dem Berührungsbildschirm bewegen, Feststellen der Anzahl der Finger auf dem Berührungsbildschirm anhand der Anzahl von Trennern, die zum Trennen von Berührungssteuerungsinformationen unterschiedlicher Finger in den Berührungssteuerungsinformationen verwendet wurden; und wenn festgestellt wird, dass sich zwei Finger auf dem Berührungsbildschirm bewegen, Aufzeichnen aktueller Koordinaten der zwei Finger und einer aktuellen Zeit in Echtzeit, und Berechnen einer Entfernung zwischen den zwei Fingern; und wenn ein absoluter Wert einer Differenz zwischen einer aktuellen Entfernung zwischen den zwei Fingern und einer früheren Entfernung zwischen den zwei Fingern größer als die Entfernungsabweichungsschwelle ist und eine Differenz zwischen zwei Zeiten größer als die Zeitabweichungsschwelle ist, Feststellen, dass die Geste eine gültige Geste ist.

2. Verfahren nach Anspruch 1, wobei die vorgespeicherten empirischen Geschwindigkeitswerte empirische Gestengeschwindigkeitswerte sind, die von Beispielnutzern unterschiedlichen Alters, unterschiedlicher Körpergrößen und unterschiedlichen Geschlechts ermittelt wurden und entsprechend einer Normalverteilung angeordnet sind.

3.  Verfahren nach Anspruch 1, wobei das Erfassen von Berührungssteuerungsinformationen zu jedem Finger auf dem Berührungsbildschirm des mobilen Endgeräts (202) Folgendes umfasst:
    Erfassen, durch einen Chip in einer Treiberebene des mobilen Endgeräts, der Berührungssteuerungsinformationen des Fingers auf dem Berührungsbildschirm des mobilen Endgeräts in Echtzeit, und Senden der Berührungssteuerungsinformationen an eine Architekturebene; wobei die Berührungssteuerungsinformationen Folgendes umfassen: Koordinatenwerte des Fingers in einem Koordinatensystem mit einer linken oberen Ecke des Berührungsbildschirms des mobilen Endgeräts als einen Ursprung, eine Breite des Fingers, einen Druck des Fingers auf den Berührungsbildschirm und einen Schaltflächenberührungswert des Fingers.

4.  Verfahren nach Anspruch 1, wobei das Vorverarbeiten von Daten der Berührungssteuerungsinformationen (203) umfasst:
    Erfassen, durch eine Architekturebene des mobilen Endgeräts, von Bewegungsstatusinformationen des Fingers in einer Bewegungsklasse anhand der Daten der Berührungssteuerungsinformationen; Erfassen der Daten der Berührungssteuerungsinformationen in der Bewegungsklasse und Senden der Daten in der Bewegungsklasse an eine Gestenalgorithmus-Verarbeitungsebene; wobei die Bewegungsstatusinformationen Informationen umfassen, die jeweils angeben, dass sich ein oder mehrere Finger bewegen, alle Finger angehoben sind oder ein oder mehrere Finger nach unten gedrückt sind.

5.  Verfahren nach Anspruch 1, das ferner Folgendes umfasst:
    Erfassen, beim Feststellen von drei sich auf dem Berührungsbildschirm bewegenden Fingern, aktueller Koordinaten der drei Finger und einer aktuellen Zeit in Echtzeit, und Berechnen eines Radius eines umschriebenen Kreises der Koordinaten der drei Finger; und wenn ein Absolutwert einer Differenz zwischen dem Radius des umschriebenen Kreises der aktuellen Koordinaten der drei Finger und jenem der vorherigen Koordinaten der drei Finger größer als die Entfernungsabweichungsschwelle ist und eine Differenz zwischen zwei aktuellen Zeiten größer als die Zeitabweichungsschwelle ist, Feststellen, dass die Geste eine gültige Geste ist.

6.  Verfahren nach Anspruch 1, das ferner umfasst:
    Feststellen, dass die Geste eine ungültige Geste ist, wenn festgestellt wird, dass der Bewegungsstatus darin besteht, dass alle Finger angehoben sind oder ein oder mehrere Finger nach unten gedrückt sind.

7.  Verfahren nach Anspruch 1, das ferner umfasst:
    Ausführen einer Funktion, die der Geste an dem mobilen Endgerät entspricht, anhand eines Erkennungsergebnisses.

8.  Mobiles Endgerät zur automatischen Gestenerkennung, das Folgendes umfasst:
    ein Gestenkalibrierungsmodul (51), eine Treiberebene (52), eine Architekturebene (53) und eine Gestenalgorithmus-Verarbeitungsebene (54), wobei das Gestenkalibrierungsmodul (51) dazu ausgelegt ist, einen Berührungsbildschirm des mobilen Endgeräts zu kalibrieren und eine Zeitabweichungsschwelle und eine Entfernungsabweichungsschwelle zu erfassen und zu speichern, wenn sich zwei Finger auf dem Berührungsbildschirm bewegen;
    die Treiberebene (52) dazu ausgelegt ist, Berührungssteuerungsinformationen jedes Fingers auf dem Berührungsbildschirm des mobilen Endgeräts zu erfassen;
    die Architekturebene (53) dazu ausgelegt ist, Daten der erfassten Berührungssteuerungsinformationen vorzuverarbeiten; und
    die Gestenalgorithmus-Verarbeitungsebene (54) dazu ausgelegt ist, die vorgespeicherte Zeitabweichungsschwelle und Entfernungsabweichungsschwelle zu extrahieren, und eine Geste anhand der vorverarbeiteten Daten, der Berührungssteuerungsinformationen und der extrahierten Zeitabweichungsschwelle und Entfernungsabweichungsschwelle zu erkennen,
    wobei das Gestenkalibrierungsmodul (51) ferner dazu ausgelegt ist:

    eine Bewegungsgeschwindigkeit anhand einer Entfernungsabweichung zwischen den zwei Fingern und einer Zeit für die Abweichung abzurufen; eine Geschwindigkeit, welche der abgerufenen Bewegungsgeschwindigkeit am nächsten kommt, aus vorgespeicherten empirischen Geschwindigkeitswerten zu ermitteln; die Entfernungsabweichungsschwelle anhand der geeignetsten Geschwindigkeit und der Zeitabweichungsschwelle, die aus vorgespeicherten empirischen Zeitwerten ausgewählt wurde, abzurufen, und die Zeitabweichungsschwelle und die Entfernungsabweichungsschwelle, die abgerufen wurden, zu speichern; und
    wobei die Gestenalgorithmus-Verarbeitungsebene (54) zum Erkennen einer Geste anhand der vorverarbeiteten Daten, den Berührungssteuerungsinformationen und der extrahierten Zeitabweichungsschwelle und

    Entfernungsabweichungsschwelle ferner dazu ausgelegt ist:
    durch eine Gestenalgorithmus-Verarbeitungsebene des mobilen Endgeräts einen Bewegungsstatus des Fingers auf dem Berührungsbildschirm anhand der vorverarbeiteten Daten abzurufen; wenn festgestellt wird, dass der Bewegungsstatus darin besteht, dass sich ein oder mehrere Finger auf dem Berührungsbildschirm bewegen, Feststellen der Anzahl der Finger auf dem Berührungsbildschirm anhand der Anzahl von Trennern, die zum Trennen von Berührungssteuerungsinformationen unterschiedlicher Finger in den Berührungssteuerungsinformationen verwendet wurden; und wenn festgestellt wird, dass sich zwei Finger auf dem Berührungsbildschirm bewegen, Erfassen aktueller Koordinaten der zwei Finger und einer aktuellen Zeit in Echtzeit, und Berechnen einer Entfernung zwischen den zwei Fingern; und wenn ein absoluter Wert einer Differenz zwischen einer aktuellen Entfernung zwischen den zwei Fingern und einer früheren Entfernung zwischen den zwei Fingern größer als die Entfernungsabweichungsschwelle ist und eine Differenz zwischen zwei Zeiten größer als die Zeitabweichungsschwelle ist, Feststellen, dass die Geste eine gültige Geste ist.

9. Mobiles Endgerät nach Anspruch 8, das ferner Folgendes umfasst: eine Anwendungsebene (55) und eine Datenbank (56), wobei
die Anwendungsebene (55) dazu ausgelegt ist, eine Funktion auszuführen, die der Geste gemäß einem Erkennungsergebnis an dem mobilen Endgerät entspricht; und
die Datenbank (56) dazu ausgelegt ist, die erfasste Zeitabweichungsschwelle und Entfernungsabweichungsschwelle zu speichern, und ferner dazu ausgelegt ist, empirische Geschwindigkeitswerte und empirische Zeitwerte zu speichern.

## Revendications

1. Procédé de reconnaissance automatique d'un geste, comprenant :
l'étalonnage d'un écran tactile d'un terminal mobile, l'acquisition et le stockage d'un seuil de variation temporelle et d'un seuil de variation de distance lorsque deux doigts se déplacent sur l'écran tactile (201), comprenant :

l'obtention d'une vitesse de mouvement en fonction d'une variation de distance entre les deux doigts et d'un temps pour la variation ; la recherche d'une vitesse qui est la plus proche de la vitesse de mouvement obtenue à partir de valeurs empiriques de vitesse préalablement stockées ; l'obtention du seuil de variation de distance en fonction de la vitesse la plus proche et du seuil de variation temporelle choisi parmi des valeurs empiriques temporelles préalablement stockées, et le stockage du seuil de variation temporelle et du seuil de variation de distance obtenus ;
l'acquisition d'informations de commande tactile de chaque doigt sur l'écran tactile du terminal mobile (202), et le traitement préalable de données des informations de commande tactile acquises (203) ; et
l'extraction du seuil de variation temporelle et du seuil de variation de distance, et la reconnaissance d'un geste en fonction des données préalablement traitées, des informations de commande tactile et du seuil de variation temporelle et du seuil de variation de distance extraits (204),
dans lequel la reconnaissance d'un geste en fonction des données préalablement traitées, des informations de commande tactile et du seuil de variation temporelle et du seuil de variation de distance extraits comprend :
l'obtention, par une couche de traitement d'algorithme de geste du terminal mobile, d'un état de mouvement du doigt sur l'écran tactile en fonction des données préalablement traitées ; lorsqu'il est déterminé que l'état de mouvement est le fait qu'un ou plusieurs doigts se déplacent sur l'écran tactile, la détermination du nombre de doigts sur l'écran tactile en fonction du nombre de séparateurs utilisés pour séparer les informations de commande tactile de différents doigts dans les informations de commande tactile ; et lorsqu'il est déterminé que deux doigts se déplacent sur l'écran tactile, l'enregistrement de coordonnées actuelles des deux doigts et d'un temps actuel en temps réel, et le calcul d'une distance entre les deux doigts ; et lorsqu'une valeur absolue d'une différence entre une distance actuelle entre les deux doigts et une distance précédente entre les deux doigts est supérieure au seuil de variation de distance et une différence entre deux temps est supérieure au seuil de variation temporelle, la détermination du fait que le geste est un geste valable.

2. Procédé selon la revendication 1, dans lequel les données empiriques de vitesse préalablement stockées sont des valeurs empiriques de vitesse de geste obtenues par échantillonnage d'utilisateurs d'âge, de taille et de sexe différents, qui sont agencées selon une distribution normale.

3. Procédé selon la revendication 1, dans lequel l'acquisition d'informations de commande tactile de chaque doigt sur l'écran tactile du terminal mobile (202) comprend :
l'acquisition, par une puce dans une couche pilote du terminal mobile, des informations de commande tactile du doigt sur l'écran tactile du terminal mobile en temps réel, et l'envoi des informations de commande tactile à une couche d'architecture ; dans lequel les informations de commande tactile comprennent : des valeurs de coordonnées du doigt dans un système de coordonnées ayant pour origine le coin supérieur gauche de l'écran tactile du terminal mobile, une largeur du doigt, une pression exercée par le doigt sur l'écran tactile, et une valeur de bouton poussoir du doigt.

4. Procédé selon la revendication 1, dans lequel le traitement préalable de données des informations de commande tactile (203) comprend :
l'enregistrement, par une couche d'architecture du terminal mobile, d'informations d'état de mouvement du doigt dans une catégorie de mouvements en fonction des données des informations de commande tactile ; l'enregistrement des données des informations de commande tactile dans la catégorie de mouvements et l'envoi des données de la catégorie de mouvements à une couche de traitement d'algorithme de geste ; dans lequel les informations d'état de mouvement comprennent des informations indiquant respectivement qu'un ou plusieurs doigts se déplacent, que tous les doigts sont relevés, et qu'un ou plusieurs doigts appuient vers le bas.

5. Procédé selon la revendication 1, comprenant en outre :
lorsqu'il est déterminé que trois doigts se déplacent sur l'écran tactile, l'enregistrement de coordonnées actuelles des trois doigts et d'un temps actuel en temps réel, et le calcul d'un rayon d'un cercle circonscrit des coordonnées des trois doigts ; et lorsqu'une valeur absolue d'une différence entre le rayon du cercle circonscrit des coordonnées actuelles des trois doigts et celui de coordonnées précédentes des trois doigts est supérieure au seuil de variation de distance et une différence entre deux temps actuels est supérieure au seuil de variation temporelle, la détermination du fait que le geste est un geste valable.

6. Procédé selon la revendication 1, comprenant en outre :
la détermination du fait que le geste est un geste non valable lorsqu'il est déterminé que l'état de mouvement est le fait que tous les doigts sont relevés ou qu'un ou plusieurs doigts appuient vers le bas.

7. Procédé selon la revendication 1, comprenant en outre :
la réalisation d'une fonction correspondant au geste sur le terminal mobile en fonction d'un résultat de reconnaissance.

8. Terminal mobile de reconnaissance automatique d'un geste, comprenant :

un module d'étalonnage de geste (51), une couche pilote (52), une couche d'architecture (53) et une couche de traitement d'algorithme de geste (54), dans lequel
le module d'étalonnage de geste (51) est configuré pour étalonner un écran tactile du terminal mobile, et acquérir et stocker un seuil de variation temporelle et un seuil de variation de distance lorsque deux doigts se déplacent sur l'écran tactile ;
la couche pilote (52) est configurée pour acquérir des informations de commande tactile de chaque doigt sur l'écran tactile du terminal mobile ;
la couche d'architecture (53) est configurée pour traiter préalablement des données des informations de commande tactile acquises ; et
la couche de traitement d'algorithme de geste (54) est configurée pour extraire le seuil de variation temporelle et le seuil de variation de distance préalablement stockés, et reconnaître un geste en fonction des données préalablement traitées, des informations de commande tactile et du seuil de variation temporelle et du seuil de variation de distance extraits,
dans lequel le module d'étalonnage de geste (51) est configuré en outre pour :

obtenir une vitesse de mouvement en fonction d'une variation de distance entre les deux doigts et d'un temps pour la variation ; rechercher une vitesse qui est la plus proche de la vitesse de mouvement obtenue à partir de valeurs empiriques de vitesse préalablement stockées ; obtenir le seuil de variation de distance en fonction de la vitesse la plus proche et le seuil de variation temporelle choisi parmi des valeurs empiriques temporelles préalablement stockées, et stocker le seuil de variation temporelle et le seuil de variation de distance obtenus, et dans lequel afin de reconnaître un geste en fonction des données préalablement traitées, des informations de commande tactile et du seuil de variation temporelle et du seuil de variation de distance extraits, la couche de traitement d'algorithme de geste (54) est configurée en outre pour :
obtenir, par une couche de traitement d'algorithme de geste du terminal mobile, un état de mouvement du doigt sur l'écran tactile en fonction des données préalablement traitées ; lorsqu'il est déterminé que l'état de mouvement est le fait qu'un ou plusieurs doigts se déplacent sur l'écran tactile, déterminer le nombre de doigts sur l'écran tactile en fonction du nombre de séparateurs utilisés pour séparer les informations de commande tactile de différents doigts dans les informations de commande tactile ; et lorsqu'il est déterminé que deux doigts se déplacent sur l'écran tactile, enregistrer les coordonnées actuelles des deux doigts et un temps actuel en temps réel, et calculer une distance entre les deux doigts ; et lorsqu'une valeur absolue d'une différence entre une distance actuelle entre les deux doigts et une distance précédente entre les deux doigts est supérieure au seuil de variation de distance et une différence entre deux temps est supérieure au seuil de variation temporelle, déterminer que le geste est un geste valable.

9. Terminal mobile selon la revendication 8, comprenant en outre : une couche applicative (55) et une base de données (56), dans lequel
la couche applicative (55) est configurée pour réaliser une fonction correspondant au geste sur le terminal mobile en fonction d'un résultat de reconnaissance ; et
la base de données (56) est configurée pour stocker le seuil de variation temporelle et le seuil de variation de distance acquis, et configurée en outre pour stocker des valeurs empiriques de vitesse et des valeurs empiriques temporelles.

Fig. 1

```
┌─────────────────────────┐
│    Application layer     │
└─────────────────────────┘
             ▲
┌─────────────────────────┐
│    Gesture algorithm     │
│     processing layer     │
└─────────────────────────┘
             ▲
┌─────────────────────────┐
│    Architecture layer    │
└─────────────────────────┘
             ▲
┌─────────────────────────┐
│       Driver layer       │
└─────────────────────────┘
```

Fig. 2

201: a touch screen of a mobile terminal is calibrated, and a time variation threshold and a distance variation threshold are acquired and stored when a finger moves on the touch screen

202: touch control information of the finger on the touch screen of the mobile terminal is acquired

203: data in the acquired touch control information is pre-processed

204: the time variation threshold and a distance variation threshold pre-stored are extracted; and a gesture is recognized according to the pre-processed data, the touch control information and the extracted time variation threshold and distance variation threshold

205: a function corresponding to the gesture is realized on the mobile terminal according to a recognition result

Fig. 3

| Data format of one finger: | Data format of two fingers: | Data format of three fingers: | Data format of N fingers: |
|---|---|---|---|
| X Value, | X1 Value, | X1 Value, | X1 Value, |
| Y Value, | Y1 Value, | Y1 Value, | Y1 Value, |
| W Value, | W1 Value, | W1 Value, | W1 Value, |
| P Value, | P1 Value, | P1 Value, | P1 Value, |
| SYN_MT_REPORT Value, | SYN_MT_REPORT Value, | SYN_MT_REPORT Value, | SYN_MT_REPORT Value, |
| BTN_TOUCH Value | X2 Value, | X2 Value, | X2 Value, |
| SYN_REPORT Value | Y2 Value, | Y2 Value, | Y2 Value, |
| | W2 Value, | W2 Value, | W2 Value, |
| | P2 Value, | P2 Value, | P2 Value, |
| | SYN_MT_REPORT Value, | SYN_MT_REPORT Value, | SYN_MT_REPORT Value, |
| | BTN_TOUCH Value | X2 Value, | ......... |
| | SYN_REPORT Value | Y2 Value, | Xn Value, |
| | | W2 Value, | Yn Value, |
| | | P2 Value, | Wn Value, |
| | | SYN_MT_REPORT Value, | Pn Value, |
| | | BTN_TOUCH Value | SYN_MT_REPORT Value, |
| | | SYN_REPORT Value | BTN_TOUCH Value |
| | | | SYN_REPORT Value |

Fig. 4

| Data format of one finger: X Value, Y Value, W Value, P Value, SYN_MT_REPORT Value, SYN_REPORT Value | Data format of two fingers: X1 Value, Y1 Value, W1 Value, P1 Value, SYN_MT_REPORT Value, X2 Value, Y2 Value, W2 Value, P2 Value, SYN_MT_REPORT Value, SYN_REPORT Value | Data format of three fingers: X1 Value, Y1 Value, W1 Value, P1 Value, SYN_MT_REPORT Value, X2 Value, Y2 Value, W2 Value, P2 Value, SYN_MT_REPORT Value, X2 Value, Y2 Value, W2 Value, P2 Value, SYN_MT_REPORT Value, SYN_REPORT Value | Data format of N fingers: X1 Value, Y1 Value, W1 Value, P1 Value, SYN_MT_REPORT Value, X2 Value, Y2 Value, W2 Value, P2 Value, SYN_MT_REPORT Value, ......... Xn Value, Yn Value, Wn Value, Pn Value, SYN_MT_REPORT Value, SYN_REPORT Value |

Fig. 5

| Driver layer 52 | → | Architecture layer 53 | → | Gesture algorithm processing layer 54 | → | Application layer 55 |

| Gesture calibrating module 51 | ← | Database 56 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080309632 A1
- WO 2005018129 A2
- EP 2042978 A2